# FASCICULE DE BREVET EUROPEEN

(11) **EP 0 663 317 B1**
(45) Date de publication et mention de la délivrance du brevet: **11.03.1998**
(21) Numéro de dépôt: 94402340.7
(22) Date de dépôt: 18.10.1994
(51) Int. Cl.: B60N 2/44

(54) **Revêtement pour siège et son application notamment à un siège avec appui-tête**
Sitzbezug und seine Verwendung in einem Sitz mit Kopfstütze
Covering for seat and its use in a seat with headrest

(30) Priorité: 14.01.1994 FR 9400392
(43) Date de publication de la demande: 19.07.1995
(73) Titulaire: CESA COMPAGNIE EUROPEENNE DE SIEGES POUR AUTOMOBILES, 92307 Levallois-Perret Cédex (FR)
(72) Inventeur: Baret, Frédéric, F-45200 Montargis (FR); Fourrey, François, F-45200 Montargis (FR); Hircq, Alain, F-45200 Montargis (FR)
(74) Mandataire: Polus, Camille

(56) Documents cités:
- EP-A- 0 552 038
- FR-A- 2 287 877
- FR-A- 2 651 979
- US-A- 2 520 584
- US-A- 5 007 676
- US-A- 5 251 962

## Description

La présente invention concerne les sièges et, plus particulièrement, un revêtement perfectionné pour un siège qui présente au moins un ajour tel que par exemple un siège avec appui-tête notamment pour automobile.

La plupart des appuis-tête ou repose-tête équipant les sièges pour automobiles sont des sous-ensembles distincts des dossiers de ces sièges et sont reliés à l'armature de ces derniers par des techniques bien connues faisant appel à des tiges métalliques ou similaires, solidaires de l'armature de repose-tête, qui pénètrent dans des douilles convenablement adaptées ou similaires solidaires de l'armature de dossier. Le plus souvent ces appuis-tête sont réglables en hauteur et en profondeur voire en inclinaison et peuvent être séparés à volonté du dossier du siège après libération d'un système de condamnation.

On connaît aussi depuis un certain nombre d'années des appuis-tête qui font partie intégrante du dossier, soit parce que leur armature est rendue solidaire de celle du dossier par exemple par soudage, soit parce que c'est l'armature de dossier qui se prolonge vers le haut en se rétrécissant et qui forme repose-tête.

Le revêtement d'habillage aussi appelé "coiffe" dans la technique, le plus souvent en tissu ou analogue, est dans ces deux cas fait en général d'une pièce unique. Il en résulte une forme et un aspect massifs et peu esthétiques, valant même à ces sièges à dossier haut la dénomination de "sièges momies".

On a cherché à affiner la silhouette de tels types de sièges en pratiquant une ou plusieurs ouvertures ou ajours le plus souvent horizontaux, notamment au voisinage de la zone de raccordement entre un appui-tête et un dossier traditionnels. Cet ajourage offre aussi au moins un autre avantage en dehors de l'amélioration esthétique : celui de procurer au conducteur ou au passager une meilleure visibilité vers l'arrière ou vers l'avant respectivement du véhicule soit pour manoeuvrer, surveiller l'environnement ou communiquer notamment entre occupants avant et arrière qui se trouvent ainsi visuellement et psychologiquement moins "enfermés".

Toutefois la finition ou l'habillage d'un tel siège en particulier au voisinage de ces ajours, soulève des difficultés techniques ou nécessite l'utilisation d'artifices par exemple l'emploi d'accessoires de finition séparés tels des baguettes profilées ou des joncs moulés, et en tout cas des opérations qui augmentent le coût de l'opération.

US-A-2 520 584 décrit un revêtement d'accoudoir de porte de véhicule automobile. US-A-5 251 962 décrit un siège de véhicule automobile avec un ajour.

L'invention propose une technique simple, rapide, économique et esthétique pour résoudre notamment le problème de la finition au voisinage d'un ajour notamment dans un dossier de siège équipé d'un appui-tête par exemple pour automobile.

L'invention a pour objet un revêtement de siège d'automobile qui comprend un coussin de dossier avec un paroi frontale et une paroi dorsale et un ajour (30) transversal qui transperce le coussin d'une de ses parois à l'autre et qui est délimité par une tranche reliant ces parois de manière à définir une partie principale de dossier proprement dit et une partie secondaire d'appui-tête sur ce coussin, où ce revêtement comprend une housse avec un corps destiné à revêtir la partie principale, avec un bonnet destiné à coiffer la partie secondaire et avec deux faces opposées destinées à recouvrir l'une la paroi frontale et l'autre la face dorsale du coussin, l'une au moins de ces deux faces opposées étant munie d'une ouverture avec deux lèvres opposées dont l'une est libre et dont l'autre est pourvue d'un rabat délimité par une bordure, l'autre de ces deux faces opposées étant munie d'un rebord, et le revêtement comprenant de plus un moyen de finition constitué de deux éléments complémentaires aptes à coopérer dont l'un est fixé à cette lèvre libre et à cette bordure du rabat et dont l'autre est fixé à ce rebord de manière qu'une fois la housse enfilée sur le coussin son bonnet coiffant cette partie secondaire et son corps revêtant cette partie principale et après passage du rabat au travers de l'ajour, la réunion des deux éléments du moyen de finition contribue à la fixation du revêtement sur le siège, le rebord étant joint simultanément à cette lèvre libre et à cette bordure.

D'autres caractéristiques de l'invention apparaîtront à la lecture de la description et des revendications qui suivent ainsi qu'à l'examen du dessin annexé, donné seulement à titre d'exemple, où:
- la Figure 1 est une vue perspective schématique partielle de trois quart avant d'un siège équipé d'un revêtement perfectionné selon l'invention en cours d'installation;
- la Figure 2 est une vue de l'arrière du siège de la Figure 1 où son revêtement est définitivement mis en place;
- les Figures 3A et 3B sont des coupes médianes axiales verticales du siège des Figures 1 et 2 le revêtement étant en cours de pose ou mis en place respectivement;
- la Figure 4 est une vue similaire à celle de la Figure 2 d'un autre mode de réalisation d'un revêtement selon l'invention;
- les Figures 5 et 6 sont des vues partielles similaires à celle de la Figure 2 d'autres modes de réalisation d'un revêtement selon l'invention; et
- les Figures 7 et 8 sont des sections transversales du moyen de finition illustrant des détails des réalisations.

Les sièges et leurs revêtements et, en particulier, ceux destinés à des véhicules automobiles terrestres étant bien connus dans la technique, on ne décrira dans ce qui suit que ce qui concerne directement ou indirectement l'invention. Pour le surplus, l'Homme du Métier de la technique considérée puisera dans les solutions classiques courantes à sa disposition pour faire face aux problèmes particuliers auxquels il est confronté.

Dans ce qui suit, on utilise toujours un même numéro de référence pour identifier un organe ou élément homologue quel que soit le mode de réalisation ou sa variante d'exécution.

Pour la commodité de l'exposé, on décrira successivement chacun des constituants d'un revêtement perfectionné selon l'invention avant d'en exposer la fabrication au besoin, et la mise en oeuvre.

L'invention sera décrite dans une application spécifique à un dossier de siège équipé d'un appui-tête. Il est clair que l'application de l'invention n'est pas limitée à ce cas particulier.

Un revêtement perfectionné pour siège à ajour selon l'invention est, par exemple, destiné à garnir ou "habiller" un siège dont l'armature 10 est équipée d'un coussin 20 ou matelassure. Comme il est classique, l'armature 10 est par exemple faite de cornières ou de tubes convenablement mis en forme et mécano-soudés. Le coussin 20 est par exemple constitué d'une matelassure en mousse d'un matériau synthétique associée à un support fait par exemple d'un réseau de fils métalliques élastiques.

Le coussin 20 présente une paroi 21 frontale, une paroi 22 dorsale qui par exemple sont reliées entre elles par un pourtour.

Un ajour 30, de préférence transversal, transperce le coussin 20 de part en part, d'une de ses parois à l'autre. Cet ajour 30 est délimité par une tranche 31 qui relie les parois frontale 21 et dorsale 22 de manière à définir une partie 301 principale et une partie 302 secondaire sur le coussin 20. Dans le mode particulier de réalisation de l'invention tel qu'il est représenté, la partie principale 301 constitue le dossier proprement dit du siège et la partie secondaire 302 constitue un appui-tête.

Le revêtement comprend une housse ou coiffe 40 avec un corps 401 destiné à revêtir la partie principale 301 et avec un bonnet 402 destiné à coiffer la partie secondaire 302. Cette housse comprend deux faces 41, 42 opposées qui sont destinées à recouvrir l'une la paroi frontale et l'autre la face dorsale du coussin.

Comme on le voit, l'une au moins des deux faces opposées 41, 42 de la housse 40, par exemple la face 41 est munie d'une ouverture 410 avec deux lèvres 411, 412 opposées. L'une de ces lèvres, par exemple la lèvre 411 est libre et l'autre de ces lèvres, par exemple la lèvre 412 est pourvue d'un rabat 4120 délimité par une bordure 4121. Ce rabat ou empiècement est d'un seul tenant ou rapporté. L'autre des deux faces opposées 41, 42 de la housse par exemple la face 42 est munie d'un rebord 420.

Le moyen de finition 50 est constitué de deux éléments 51, 52 complémentaires aptes à coopérer lorsqu'ils sont réunis. Ce moyen de finition 50 est par exemple comme dessiné schématiquement une fermeture à glissière en deux parties déconnectables et séparables que l'on ferme à l'aide d'un curseur, ou une fermeture à agrippage à crochets et oeillets ou ganses du type de celle commercialisée sous la dénomination Velcro. Il est clair que tout autre type de moyen de finition du genre par exemple de ceux à rainure et languette mutuellement encastrables utilisés pour fermer de manière réversible ou irréversible les sacs ou sachets en matière plastique convient aussi de même que des boutons pressions ou similaires.

Comme on peut l'observer, l'un des éléments complémentaires coopérant 51, 52 par exemple l'élément 51 est fixé à la lèvre libre 411 et à la bordure 4121 du rabat 4120, alors que l'autre de ces éléments par exemple l'élément 52 est fixé au rebord 420.

La housse du revêtement est par exemple faite en tout matériau textile naturel ou synthétique, ou de cuir naturel ou synthétique ou bien d'un mélange de ces matériaux ou de tous autres matériaux, comme il est connu pour "habiller" des sièges en particulier des sièges d'automobile.

Ces matériaux sont découpés en panneaux de configuration propres déterminés qui sont ensuite réunis et assemblés par des techniques traditionnelles convenablement adaptées telles la couture, le collage, le soudage,.....

La mise en oeuvre du revêtement selon l'invention se fait comme indiqué par la suite.

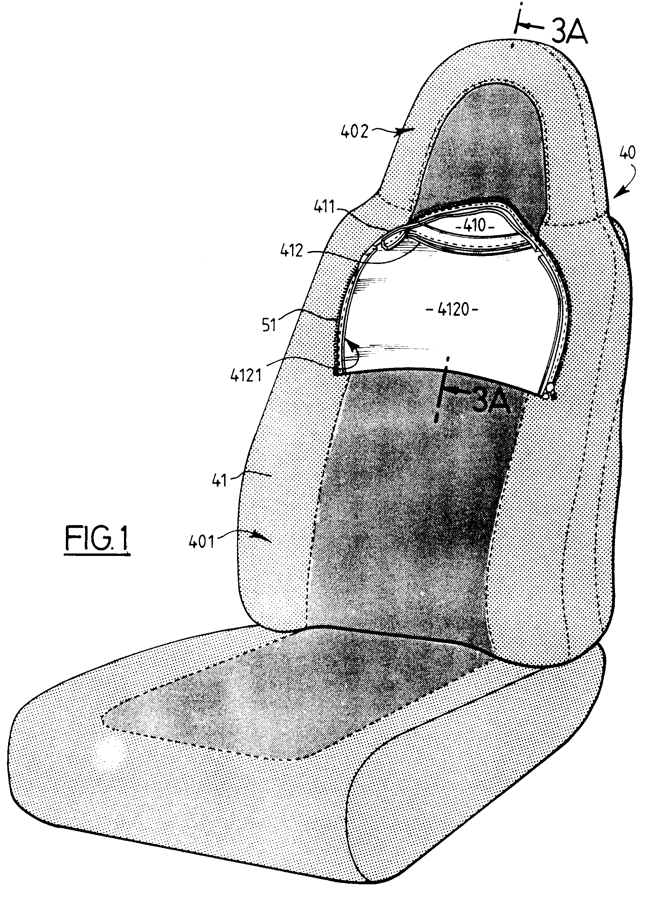

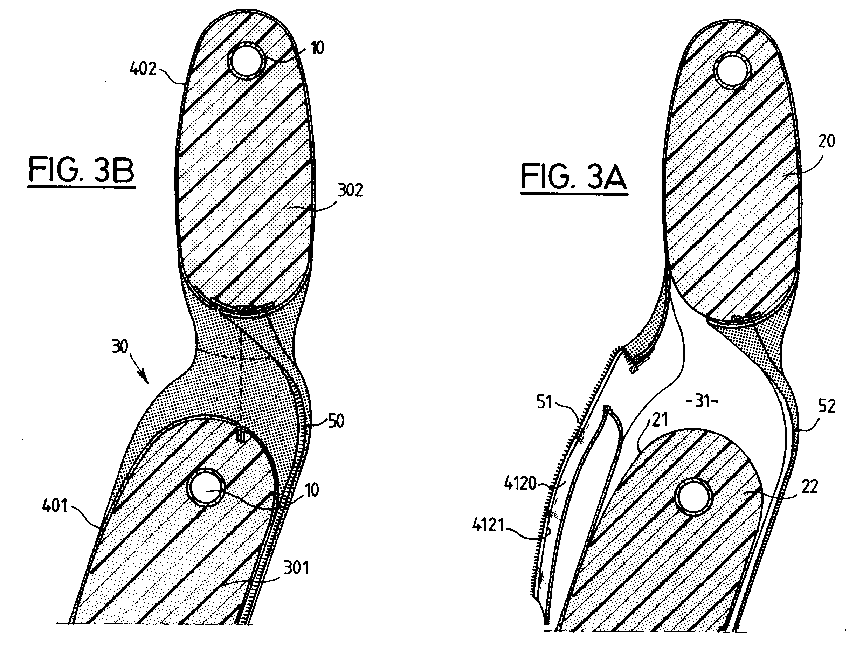

Initialement on fait en sorte que le rabat soit replié et au contact de la surface de la face de la housse qui sera située à l'extérieur du siège. La housse ou coiffe étant dans cette situation, on la passe et on l'enfile sur le coussin à la manière d'une chaussette afin que le bonnet vienne coiffer la partie secondaire, c'est-à-dire dans ce cas particulier l'appui-tête et le corps vienne revêtir la partie principale c'est-à-dire dans ce cas particulier le dossier proprement dit. Le siège avec son dossier se trouve alors dans la situation illustrée notamment sur la Figure 1 et sur la Figure 3A.

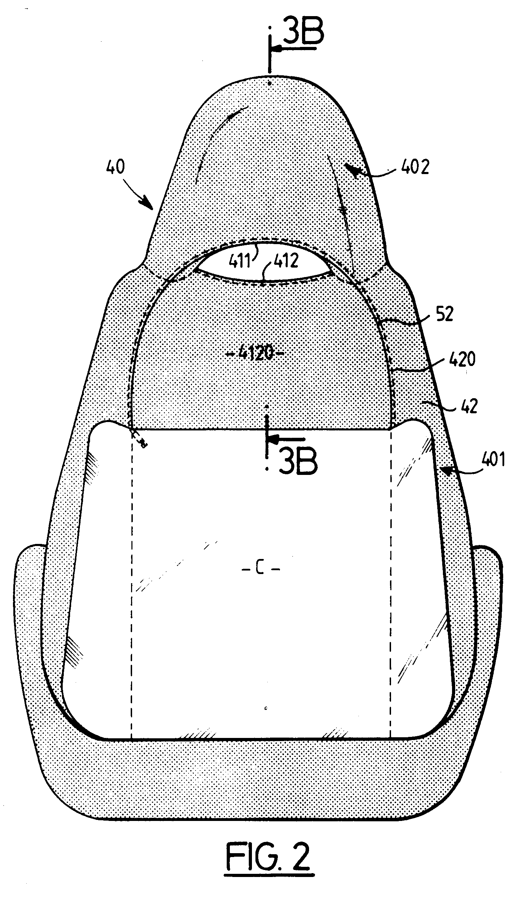

On fait ensuite passer le rabat au travers de l'ajour et on l'applique contre la paroi dorsale du coussin de manière que sa surface qui était initialement cachée et en regard de la face frontale de la housse, c'est-à-dire l'endroit du rabat devienne apparente, comme illustré sur la Figure 2.

Il suffit alors de réunir les deux éléments du moyen de finition. Pour ce faire, on rassemble par exemple les deux parties de la fermeture à glissière en engageant l'une de celles-ci dans le curseur et il suffit ensuite de faire coulisser le curseur pour fermer la fermeture à glissière. Si l'on utilise une fermeture à agrippage ou aussi dite autoagrippante comme moyen de finition ou une fermeture à rainure et languette, ou autre on opère d'une manière similaire.

On voit alors que les deux éléments du moyen de finition qui sont maintenant réunis, contribuent à la fixation du revêtement sur le siège puisque le rebord est maintenant joint simultanément à la lèvre libre de l'ouverture et à la bordure du rabat fixé à l'autre lèvre de l'ouverture.

La Figure 1 représente une vue perspective de trois quart avant d'un siège pour automobile avec un revêtement conforme à l'invention. On voit que dossier et appui-tête sont d'un seul tenant et qu'un ajour est ménagé entre le haut du dossier proprement dit et le bas de l'appui-tête. Cet ajour a notamment pour effet d'affiner l'aspect du siège car ses dimensions ne sont pas suffisantes pour permettre de "voir au travers". Cet appui-tête n'est pas réglable, ni en hauteur ni en profondeur par exemple.

La Figure 2 est une vue arrière du siège de la Figure 1 où le moyen de finition a été représenté de façon schématique. Les parties arrière médiane et inférieure de dossier sont couvertes par exemple d'un carter C ou similaire par exemple de finition encliqueté ou vissé, notamment en matière plastique ou similaire comme il est classique. On notera que par exemple les parties supérieure et latérales du carter viennent en recouvrement sur le corps de la housse pour assurer une bonne finition ou présentation soignée. Mais il est clair que la finition de l'habillage peut être différente tout en utilisant la technique selon l'invention comme on le verra par la suite.

Dans tous les cas, le moyen de finition comprend un élément solidaire de ce qu'on a appelé rabat ou empiècement et un autre élément solidaire de la face (ici dorsale) de la housse commune au dossier proprement dit et à l'appui-tête, de manière à pouvoir solidariser ou au besoin désolidariser ces deux éléments.

La mise en oeuvre de la technique selon l'invention se fait comme suit.

La Figure 2 représente le siège tel qu'il se présente une fois le garnissage ou habillage terminé.

Supposons qu'on veuille "déshabiller" le siège, c'est-à-dire ici ôter ou retirer la housse ou coiffe de dossier, on commence bien sûr par déposer le cas échéant le carter, si cela est nécessaire, qui est soit vissé, encliqueté ou fixé par toute technique classique par exemple sur l'armature de dossier. On saisit l'extrémité de la fermeture à glissière qui porte le curseur ou tirette. Cette fermeture à glissière est de préférence du type totalement séparable. En faisant coulisser le curseur ou la tirette d'un bout au bout opposé de la fermeture à glissière, on sépare les deux éléments du moyen de finition et l'on isole ainsi le rabat ou l'empiècement qui reste néanmoins solidaire de la partie secondaire de la housse ou coiffe de dossier. On peut alors faire passer ce rabat ou empiècement au travers de l'ajour de manière à le placer sur le devant du dossier, l'envers du rabat ou empiècement visible, comme représenté à la Figure 1. Il suffit ensuite de retirer la housse ou coiffe du dossier/appui-tête en la retroussant comme une chaussette puisque le rabat ou l'empiècement ne s'oppose plus à cette opération.

Si l'on désire maintenant procéder à la repose de la housse ou coiffe ou à la mise en place d'un modèle de housse ou coiffe autre, différent par le style ou la couleur ou autre, on procède de manière exactement inverse, dans l'ordre opposé des opérations.

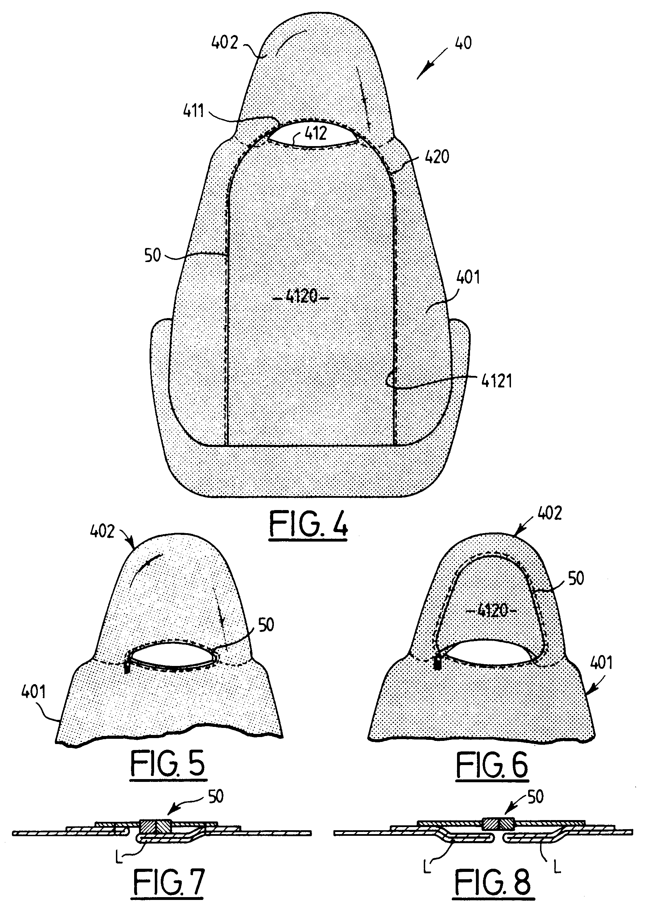

Comme indiqué auparavant, le carter C de finition arrière du dossier n'est pas indispensable. Le rabat ou empiècement décrit précédemment peut être prolongé jusqu'au bas du dossier comme illustré sur la Figure 4.

On a décrit un rabat ou empiècement solidarisable avec le corps de la housse ou coiffe de dossier selon l'invention. On peut tout aussi bien utiliser un rabat ou empiècement solidarisable avec le bonnet de la housse ou coiffe comme illustré sur la Figure 6.

Selon un autre mode d'exécution, on peut se contenter d'un moyen de finition tel que représenté sur la Figure 5, en forme d'ellipse et où le rabat est réduit à sa taille minimale. Pour "déshabiller" l'ensemble dossier/appui-tête, il suffit alors de désolidariser les deux éléments du moyen de finition. On obtient de cette manière au voisinage de l'ouverture une paire de lèvres qui baillent et qui de ce fait ne s'opposent plus au déshabillage.

Si le moyen de finition est une fermeture à glissière, on peut améliorer son aspect par des techniques qui consistent à confectionner un ou deux ourlets ou "remplis" formant lèvre(s) L comme illustré.

On constate que la finition est excellente.

On voit bien d'après ce qui précède que l'invention apporte une solution simple, rapide, élégante et économique au problème de l'habillage final d'un siège à ajour recouvert d'une housse ou coiffe d'un seul tenant:
- un seul moyen de finition au lieu d'au moins deux selon la technique traditionnelle, ou l'usage de pièces rapportées;
- facilité et rapidité du garnissage en usine pour l'assemblage des sièges;
- possibilité de procéder à un échange rapide de la housse ou coiffe à la suite de détériorations ou de souillures ou pour changer notamment les couleurs et/ou le style de la housse ou coiffe;
- la partie visible du moyen de finition est situé par exemple à l'arrière du dossier et son aspect peut être amélioré par des techniques de masquage, qui améliore l'aspect visuel lorsqu'on le regarde.

Ce qui précède met bien en lumière les particularités distinctives de l'invention, l'intérêt qu'elle offre et les avantages qu'elle procure.

## Revendications

1. Revêtement de siège d'automobile qui comprend un coussin (20) de dossier avec un paroi (21) frontale et une paroi (22) dorsale et un ajour (30) transversal qui transperce le coussin (20) d'une de ses parois (21, 22) à l'autre et qui est délimité par une tranche (31) reliant ces parois (21, 22) de manière à définir une partie (301) principale de dossier proprement dit et une partie (302) secondaire d'appui-tête sur ce coussin (20), où ce revêtement comprend une housse (40) avec un corps (401) destiné à revêtir la partie principale (301), avec un bonnet (402) destiné à coiffer la partie secondaire (302) et avec deux faces (41, 42) opposées destinées à recouvrir l'une la paroi frontale (21) et l'autre la face dorsale (22) du coussin (20), l'une (41) au moins de ces deux faces opposées (41, 42) étant munie d'une ouverture (410) avec deux lèvres (411, 412) opposées dont l'une (411) est libre et dont l'autre (412) est pourvue d'un rabat (4120) délimité par une bordure (4121), l'autre (42) de ces deux faces opposées (41, 42) étant munie d'un rebord (420), et le revêtement comprenant de plus un moyen de finition (50) constitué de deux éléments (51, 52) complémentaires aptes à coopérer dont l'un (51) est fixé à cette lèvre libre (411) et à cette bordure (4121) du rabat (4120) et dont l'autre (52) est fixé à ce rebord (420) de manière qu'une fois la housse (40) enfilée sur le coussin (20) son bonnet (402) coiffant cette partie secondaire (302) et son corps (401) revêtant cette partie principale (301) et après passage du rabat (4120) au travers de l'ajour (30), la réunion des deux éléments (51, 52) du moyen de finition (50) contribue à la fixation du revêtement sur le siège, le rebord (420) étant joint simultanément à cette lèvre libre (411) et à cette bordure (4121).

2. Revêtement selon la revendication 1, caractérisé en ce que le rabat est un empiècement rapporté.

3. Revêtement selon la revendication 1 ou 2, caractérisé en ce que le moyen de finition est une fermeture à glissière.

4. Revêtement selon la revendication 1 ou 2, caractérisé en ce que le moyen de finition est une fermeture à agrippage.

## Claims

1. Covering for a car seat which comprises a back cushion (20) with a front wall (21) and a back wall (22) and a transverse opening (30) which penetrates the cushion (20) from one of its walls (21, 22) to the other and which is defined by an edge (31) connecting these walls (21, 22) in order to define the main so-called back part (301) and a secondary headrest part (302) on this cushion (20), where this covering comprises a cover (40) with a body (401) intended to cover the main part (301), with a cap (402) intended to cover the secondary part (302) and with two opposite sides (41, 42) intended to cover one the front wall (21) and the other the back wall (22) of the cushion (20), at least one (41) of these two opposite sides (41, 42) being provided with an opening (410) with two opposite lips (411, 412), whereof one (411) is free and whereof the other (412) is provided with a flap (4120) defined by a border (4121), the other (42) of these two opposite sides (41, 42) being provided with an edge (420) and the covering in addition comprising finishing means (50) constituted by two complementary members (51, 52), which are able to cooperate, whereof one (51) is fixed to this free lip (411) and to this border (4121) of the flap (4120) and whereof the other (52) is fixed to this edge (420) in order that once the cover (40) is fitted on the cushion (20), its cap (402) covering this secondary part (302) and its body (401) covering this main part (301) and after the passage of the flap (4120) through the opening (30), the joining of the two members (51, 52) of the finishing means (50) contributes to the fixing of the covering on the seat, the edge (420) being joined simultaneously to this free lip (411) and to this border (4121).

2. Covering according to Claim 1, characterized in that the flap is an attached yoke.

3. Covering according to Claim 1 or 2, characterized in that the finishing means is a zip fastener.

4. Covering according to Claim 1 or 2, characterized in that the finishing means is a velcro fastener.

## Patentansprüche

1. Bezug für einen Sitz eines Kraftfahrzeuges, welcher eine gepolsterte Rückenlehne (20) mit einer Vorderseite (21) und einer Rückseite (22), sowie einen querliegenden Ausschnitt (30) enthält, welcher diese Polsterung (20) von einer ihrer Seiten (21, 22) zu ihrer anderen Seite durchquert und welcher von einem Randabschnitt (31) umrandet wird, welcher diese Seiten (21, 22) so miteinander verbindet, daß ein Hauptteil (301) der eigentlichen Rückenlehne und ein sekundärer Teil (302) als Kopfstütze auf dieser Polsterung (20) ausgebildet wird, und bei dem dieser Bezug eine Hülle (40) mit einem Körperteil (401) enthält, welcher den Hauptteil (301) bekleiden soll, und mit einer Kappe (402) ausgestattet ist, welche den sekundären Teil (302) überdecken soll, und mit zwei gegenüberliegenden Seiten (41, 42) versehen ist, von denen die eine dieser Seiten die Vorderseite (21) und die andere dieser Seiten die Rückseite (22) der Polsterung (20) überdecken soll, wobei mindestens eine (41) dieser beiden gegenüberliegenden Seiten (41, 42) mit einer Öffnung (410) mit zwei gegenüberliegenden Lippen (411, 412) ausgestattet ist, von denen die eine Lippe (411) frei und die andere (42) dieser beiden gegenüberliegenden Seiten (41, 42) mit einer Krempe (420) ausgestattet ist, und bei dem der Bezug außerdem ein Mittel für seine Endbefestigung (50) aufweist welches aus zwei kooperierenden komplementären Elementen (51, 52) besteht, von denen das eine Element (51) an dieser freien Lippe (411) und an dieser Einfassung (4121) der Umschlagklappe (4120) befestigt ist, während das andere Element (52) an dieser Krempe (420) so befestigt ist, daß sobald die Hülle (40) so über die Polsterung (20) gezogen worden ist, daß ihre Kappe (402) diesen sekundären Teil (302) und sein Körperteil (401) diesen Hauptteil (301) überdeckt, und nachdem die Umschlagklappe (4120) durch den Ausschnitt (30) gezogen worden ist, die Verbindung dieser beiden Elemente (51, 52) des Mittels für die Endbefestigung (50) zum Anbringen des Bezuges auf dem Sitz beiträgt, wobei die Krempe (420) gleichzeitig mit dieser freien Lippe (411) und dieser Einfassung (4121) zusammengefügt wird.

2. Bezug für einen Fahrzeugsitz nach Anspruch 1,
**dadurch gekennzeichnet, daß**
die Umschlagklappe aus einem angesetzten Teil besteht.

3. Bezug für einen Fahrzeugsitz nach einem der Ansprüche 1 oder 2,
**dadurch gekennzeichnet, daß**
das Mittel für die Endbefestigung aus einem Reißverschluß besteht.

4. Bezug für einen Fahrzeugsitz nach einem der Ansprüche 1 oder 2,
**dadurch gekennzeichnet, daß**
das Mittel für die Endbefestigung aus einem Haftverschluß besteht.
